# FASCICULE DE BREVET EUROPEEN

(11) **EP 2 904 304 B1**
(45) Date de publication et mention de la délivrance du brevet: **23.11.2016**
(21) Numéro de dépôt: 13774113.8
(22) Date de dépôt: 01.10.2013
(51) Int. Cl.: F17C 1/12, F17C 11/00

(54) **RESERVOIR DE STOCKAGE D'HYDROGENE A HYDRURES METALLIQUES DE FABRICATION SIMPLIFIEE ET DISPOSITIF DE STOCKAGE COMPORTANT AU MOINS UN TEL RESERVOIR**
WASSERSTOFFSPEICHERTANK MIT DURCH VEREINFACHTE HERSTELLUNG HERGESTELLTEN METALLHYDRIDEN SOWIE LAGERUNGSVORRICHTUNG MIT MINDESTENS SOLCH EINEM TANK
HYDROGEN STORAGE TANK COMPRISING METAL HYDRIDES PRODUCED THROUGH SIMPLIFIED MANUFACTURE AND STORAGE DEVICE COMPRISING AT LEAST SUCH A TANK

(30) Priorité: 04.10.2012 FR 1202650
(43) Date de publication de la demande: 12.08.2015
(73) Titulaire: Commissariat à l'Énergie Atomique et aux Énergies Alternatives, 75015 Paris (FR)
(72) Inventeur: ELIE, Manon, 38100 Grenoble (FR); CHAISE, Albin, 38000 Grenoble (FR); GILLIA, Olivier, 38360 Sassenage (FR); PLANQUE, Michel, 38180 Seyssins (FR)
(74) Mandataire: Brevalex
(86) Numéro de dépôt international: PCT/EP2013/070465
(87) Numéro de publication internationale: WO 2014/053497

(56) Documents cités:
- EP-A2- 2 492 575
- JP-A- H09 236 199
- US-A- 4 667 815

## Description

### DOMAINE TECHNIQUE ET ART ANTÉRIEUR

La présente invention se rapporte à un réservoir de stockage d'hydrogène à hydrures métalliques et à un dispositif de stockage d'hydrogène comportant au moins un tel réservoir.

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme comprimée entre 350 et 700 Bars, ce qui pose des problèmes de sécurité. Il faut alors prévoir des réservoirs aptes à tenir ces pressions, sachant par ailleurs que ces réservoirs, lorsqu'ils sont montés dans des véhicules, peuvent être soumis à des chocs.

Il peut être stocké sous forme liquide, cependant ce stockage n'assure qu'un faible rendement de stockage et ne permet pas le stockage sur de longues durées.

Le passage d'un volume d'hydrogène de l'état liquide à l'état gazeux dans les conditions normales de pression et de température produit un accroissement de son volume d'un facteur d'environ 800. Les réservoirs d'hydrogène sous forme liquide ne sont en général pas très résistants aux chocs mécaniques, cela pose d'importants problèmes de sécurité.

Il existe également le stockage d'hydrogène dit « solide » sous la forme d'hydrure. Ce stockage autorise une densité volumique de stockage importante et met en oeuvre une pression modérée d'hydrogène tout en minimisant l'impact énergétique du stockage sur le rendement global de la chaine hydrogène, i.e. de sa production à sa conversion en une autre énergie.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante : 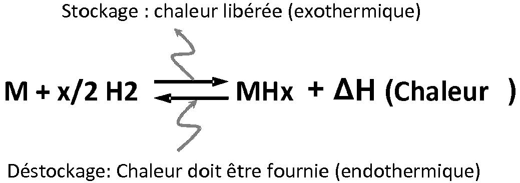
- M étant la poudre ou matrice métallique,
- MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement, i.e. la qualité des échanges thermiques conditionne les débits de chargement et de déchargement.

En outre, de façon quasi-systématique, l'hydrure et le métal, qui se présentent tous deux sous forme de poudre dans les réservoirs, ont une différence de densité comprise entre 10 % et 30 %.

Cette variation de densité au sein du réservoir a deux conséquences :
- d'une part, l'apparition de contraintes à l'intérieur des grains de poudre lors des cycles d'absorption-désorption, ce qui provoque leur fractionnement en plus petits grains. Ce phénomène est appelé décrépitation,
- d'autre part, le gonflement des grains de poudre au cours de l'absorption d'hydrogène et le dégonflement des grains lors de la désorption. Un volume libre au-dessus de la poudre est alors prévu pour tenir compte de ce gonflement.

Le phénomène de décrépitation et le phénomène de gonflement sont responsables d'une densification progressive du lit de poudre à mesure que le nombre de cycles d'absorption-désorption croît. En effet, la décrépitation fait apparaître des poudres de plus en plus fines qui migrent par gravité vers le fond du réservoir à travers le réseau de grains. De plus, lorsque la vitesse du flux d'hydrogène est suffisamment importante, les grains sont déplacés et réarrangés dans le réservoir. Par ailleurs, le lit de poudre tend à se rétracter, i.e. à voir son volume diminuer lors d'une désorption ce qui laisse un espace vide entre les parois du réservoir et le lit du matériau de stockage de l'hydrogène.

Une migration des poudres intervient par gravité via cet espace et le comble. Lors de l'absorption suivante, la poudre d'hydrure formée ne va pas se comporter comme un fluide. En particulier, le niveau du lit de poudre dans le réservoir n'est pas celui atteint lors de l'absorption précédente. En effet les frottements des grains entre eux et contre la paroi du réservoir empêchent le lit de poudre de se dilater librement. Le gonflement des grains de poudre est alors compensé par la réduction de la taille des porosités.

Le lit de matériau de stockage de l'hydrogène/d'hydrure se densifie ainsi progressivement au cours des cycles d'hydruration.

On appelle « cycle d'hydruration », une phase d'absorption suivie d'une phase de désorption d'hydrogène.

Il est donc important d'éviter une accumulation de matériau de stockage de l'hydrogène dans un espace confiné profond qui pourrait appliquer des contraintes pouvant détériorer la structure du réservoir.

Afin de réduire les problèmes liés à l'accumulation et au gonflement du matériau de stockage, il a été proposé de compartimenter la quantité de matériau de stockage mise en oeuvre. Pour cela, il a été proposé des réservoirs dans lesquels le matériau de stockage est distribué dans différents étages. Le réservoir comporte une virole traversée longitudinalement par un tube poreux pour la distribution et la collecte d'hydrogène et des coupelles montées autour du tube poreux et délimitant les étages. Si les coupelles ne délimitent pas des logements étanches, le matériau en poudre lors de la décrépitation peut passer entre la virole et la coupelle et/ou entre la coupelle et le tube poreux. Le matériau s'accumule dans les étages inférieurs et dans le fond du réservoir.

Afin d'éviter cette accumulation, le document EP 1 454 876 propose un réservoir comportant plusieurs coupelles superposées, chaque coupelle étant formée d'un fond plan muni d'un passage central pour l'alimentation et la collecte en hydrogène, d'un bord périphérique radialement extérieur et, dans le cas où le réservoir est chargé d'un matériau sous forme de poudre ou granulaire, d'un bord périphérique radialement intérieur bordant le passage central. Les coupelles sont soudées les unes autres au niveau de leur bord périphérique radialement intérieur et leur bord périphérique radialement extérieur de sorte à former des compartiments étanches. Ainsi la poudre ne peut plus s'échapper de son compartiment pour s'accumuler dans une zone inférieure.

D'une part, ce dispositif présente une grande rigidité et peut être fragilisé en cas de dilatation thermique.

D'autre part, il présente des difficultés pour le remplissage et son montage, en particulier lorsque celui-ci est assemblé et rempli en boîte à gants. En outre, il ne peut être démonté aisément.

Le document US4667815 décrit un réservoir de matériau de stockage de l'hydrogène pour dispositif de stockage de l'hydrogène par absorption dans un matériau de stockage de l'hydrogène. Le réservoir comporte un empilement de boîtes fermées indépendantes les unes des autres.

### EXPOSÉ DE L'INVENTION

C'est par conséquent un but de la présente invention d'offrir un dispositif de stockage d'hydrogène de réalisation simple et robuste et offrant un confinement efficace du matériau de stockage d'hydrogène.

Le but précédemment énoncé est atteint par un réservoir de matériau de stockage comportant une enveloppe cylindrique obturée au niveau de ses extrémités longitudinales, au moins un conduit longitudinal d'alimentation et de collecte d'hydrogène, une pluralité de godets superposés comportant un fond, une paroi périphérique extérieure, une paroi périphérique intérieure, lesdits godets étant montés à force autour du conduit longitudinal d'alimentation et de collecte d'hydrogène et étant en contact par leur paroi périphérique extérieure. Les extrémités longitudinales des parois périphériques extérieures sont configurées de sorte que l'extrémité longitudinale inférieure d'un godet situé au-dessus s'emboîte dans le godet situé directement au-dessous en provoquant une déformation au moins en partie élastique du godet inférieur.

Ainsi chaque godet délimite avec celui directement au-dessus un compartiment étanche pour le matériau de stockage de manière simple et durable. En effet la mise en oeuvre d'une liaison au moins en partie élastique permet d'éviter une structure hyperstatique et donc d'assurer une étanchéité efficace à la fois entre le conduit longitudinal d'alimentation et de collecte d'hydrogène et la partie centrale des godets et au niveau de la périphérie extérieure des godets. En outre, celle-ci est plus apte à supporter les contraintes dues aux dilatations thermiques.

De plus, l'assemblage est très simple puisqu'il est réalisé par simple emboîtement, aucune soudure ni moyen d'assemblage complexe n'est mis en oeuvre. Le réservoir peut alors aisément être assemblé en boîte à gant.

En d'autres termes, le ou les réservoirs comportent des godets empilés, le godet du dessus forme un couvercle d'obturation étanche pour le godet du dessous par coopération par déformation au moins en partie élastique entre les deux godets.

Dans un exemple avantageux, le conduit longitudinal est formé de plusieurs portions de conduit aptes à s'emboîter les unes dans les autres de sorte à former le conduit. Préalablement à l'assemblage, chaque portion de conduit est montée à force dans un godet formant ainsi des sous-ensembles. On réalise alors simultanément à l'emboîtement du godet dans le godet situé au-dessous, l'emboîtement de la portion du conduit du dessus dans la portion de conduit du dessous.

Dans un exemple de réalisation, le dispositif de stockage d'hydrogène comporte une enceinte et un ou plusieurs réservoirs formant une forêt disposés dans l'enceinte et le réservoir est rempli d'un fluide caloporteur en circulation formant le système d'échange thermique.

Dans un autre exemple de réalisation, le système d'échange thermique est formé soit par une chemise entourant le réservoir et dans lequel circule un fluide caloporteur, soit par un serpentin entourant le réservoir.

La présente invention a alors pour objet un réservoir de matériau de stockage de l'hydrogène pour dispositif de stockage de l'hydrogène par absorption dans un matériau de stockage de l'hydrogène, comportant une enveloppe d'axe longitudinal obturée à ses deux extrémités longitudinales, un conduit d'alimentation en hydrogène et de collecte de l'hydrogène s'étendant le long de l'axe longitudinal, un empilement d'une pluralité de godets le long de l'axe longitudinal, chaque godet comportant un fond sensiblement perpendiculaire à l'axe longitudinal, un passage permettant le montage du godet autour du conduit, une paroi extérieure perpendiculaire au fond, en contact avec l'enveloppe et une paroi intérieure perpendiculaire au fond et en contact avec le conduit, la paroi extérieure présentant une dimension selon l'axe longitudinal supérieure à celle de la paroi intérieure de sorte que son extrémité libre soit en contact avec le fond du godet situé au-dessus dans l'empilement, chaque godet étant monté serré sur le conduit et chaque godet comportant des moyens permettant l'emboîtement des godets les uns dans les autres par déformation mécanique desdites extrémités libres des parois extérieures des godets.

De manière avantageuse, les moyens permettant l'emboîtement des godets les uns dans les autres par déformation mécanique sont formés par une zone déformable des parois extérieures situées au niveau des extrémités libres et présentant des portions inclinées par rapport à l'axe longitudinal.

Chaque zone déformable peut comporter, du côté de l'extrémité libre de la paroi extérieure, une portion inclinée en éloignement de l'axe longitudinal de sorte à présenter une forme évasée facilitant l'emboîtement du fond du godet situé au-dessus dans l'empilement et au moins une portion inclinée en rapprochement de l'axe longitudinal (X) et en ce que chaque fond d'un godet présente un diamètre inférieur à un plus grand diamètre intérieur de la paroi extérieure dudit godet.

Le conduit est par exemple formé d'une pluralité de portions de conduits superposées le long de l'axe longitudinal. Chaque portion de conduit peut avantageusement comporter au niveau de leurs extrémités longitudinales des moyens de guidage du positionnement des portions de conduit les unes par rapport aux autres.

Chaque portion de conduit peut alors comporter une extrémité de connexion mâle et une extrémité de connexion femelle de sorte que les portions de conduit se connectent les unes aux autres. Avantageusement, les extrémités de connexion mâle et femelle ont une forme conique, d'angle au sommet inférieur ou égal à 45°.

Les godets sont de préférence réalisés en un matériau bon conducteur thermique.

Le conduit est avantageusement en matériau poreux étanche à la poudre et laissant passer l'hydrogène.

De préférence, la paroi intérieure de chaque godet comporte une extrémité libre évasée.

Le réservoir peut comporter des moyens de serrage exerçant un effort de serrage le long de l'axe longitudinal entre les godets situés aux extrémités longitudinales de l'empilement. Les moyens de serrage peuvent comporter un élément longitudinal monté dans le conduit, une pièce d'appui en butée contre un fond de l'un des godets d'extrémité et un écrou de serrage vissé sur l'élément longitudinal et en appui sur une extrémité libre de la paroi intérieure du godet situé à l'autre extrémité longitudinale.

La présente invention a également pour objet un ensemble d'un réservoir selon la présente invention et d'un matériau de stockage de l'hydrogène disposé dans chacun des godets, de préférence le matériau de stockage sous forme de poudre représente 40 % à 60 % du volume du godet.

La présente invention a également pour objet un dispositif de stockage de l'hydrogène par absorption dans un matériau de stockage de l'hydrogène, comportant au moins un réservoir de stockage selon la présente invention ou un ensemble selon la présente invention, un système d'alimentation en hydrogène et de collecte de l'hydrogène connectés au conduit dudit au moins un réservoir et des moyens d'échange thermique aptes à assurer un échange de chaleur avec le matériau de stockage destiné à être disposé dans le réservoir ou qui est disposé dans le réservoir.

Le dispositif de stockage de l'hydrogène peut comporter une enceinte dans laquelle est disposé ledit au moins un réservoir et les moyens d'échange thermique comportent des moyens d'alimentation et d'évacuation d'un fluide d'échange thermique au sein de l'enceinte aptes à générer une circulation du fluide dans l'enceinte pour apporter ou extraire de la chaleur.

Le dispositif de stockage de l'hydrogène comporte de préférence une pluralité de réservoirs.

Dans un exemple de réalisation, le réservoir est entouré d'une chemise délimitant avec l'enveloppe du réservoir un canal et les moyens d'échange thermique assurent une circulation de fluide caloporteur dans ledit canal.

Dans un autre exemple de réalisation, le dispositif de stockage de l'hydrogène comporte un tube en serpentin entourant le réservoir et les moyens d'échange thermique assurent une circulation de fluide caloporteur dans ledit tube en serpentin.

Dans un autre exemple de réalisation, le dispositif de stockage de l'hydrogène comporte une pluralité de réservoirs et les réservoirs ont leurs axes longitudinaux sensiblement parallèles, le fluide caloporteur circulant entre les réservoirs.

La présente invention a également pour objet un procédé de fabrication d'un ensemble selon la présente invention comportant les étapes :
a) mise en place du matériau de stockage de l'hydrogène dans un premier godet,
b) mise en place du premier godet dans l'enveloppe,
c) mise en place du matériau de stockage de l'hydrogène dans un deuxième godet,
d) mise en place du deuxième godet sur le premier godet en emboîtant le fond du deuxième godet dans le premier godet de sorte à déformer élastiquement l'extrémité libre de la paroi extérieure du premier godet,
e) répétition des étapes c) et d) en fonction du nombre de compartiments souhaité,
f) fermeture de l'enveloppe,
le conduit étant monté préalablement au montage des godets ou au fur et à mesure, les godets étant montés à force sur ledit conduit.

Préalablement à l'étape a), des sous-ensembles formés d'un godet et d'une portion de conduit peuvent être assemblés, une portion de conduit étant montée à force dans le passage central d'un godet.

Le matériau de stockage de l'hydrogène est de préférence sous forme de bloc solide au moment de sa mise en place, dont la forme correspond à la forme intérieure du godet.

Le procédé de fabrication d'un dispositif de stockage selon la présente invention peut comporter les étapes du procédé selon la présente invention et les étapes de connexion aux systèmes d'alimentation et de collecte de l'hydrogène et d'assemblage avec un système d'échange thermique.

### BRÈVE DESCRIPTION DES DESSINS

La présente invention sera mieux comprise à l'aide de la description qui va suivre et des dessins en annexes sur lesquels :
- la figure 1 est une vue en coupe longitudinale d'un exemple de réalisation d'un réservoir pour dispositif de stockage selon la présente invention représentée schématiquement,
- la figure 2 est une vue agrandie de la figure 1,
- les figures 3A et 3B sont des vues de détail de la figure 1 suivant différentes variantes de réalisation,
- la figure 4 est une vue en coupe longitudinale de portions de conduit d'alimentation et de collecte d'hydrogène selon un exemple de réalisation pouvant être mises en oeuvre dans le dispositif de stockage selon l'invention,
- la figure 5 est une vue partiellement écorchée d'un exemple de réalisation d'un dispositif de stockage selon l'invention.

### EXPOSÉ DÉTAILLÉ DE MODES DE RÉALISATION PARTICULIERS

Dans la suite de la description, les hydrures métalliques seront désignés par matériau de stockage ".

Dans la description qui va suivre, le ou les réservoirs décrits présentent une forme cylindrique de révolution, qui représente le mode préféré de réalisation.

Néanmoins tout réservoir formé par élément creux présentant une dimension longitudinale plus grande que sa dimension transversale, et ayant une section quelconque, par exemple circulaire ou polygonale ou ellipsoïdale ne sort pas du cadre de la présente invention.

Un dispositif de stockage d'hydrogène selon l'invention comporte un ou plusieurs réservoirs contenant du matériau de stockage et un système de gestion thermique destinée à apporter, à extraire de la chaleur pour libérer l'hydrogène, le stocker dans le matériau de stockage respectivement.

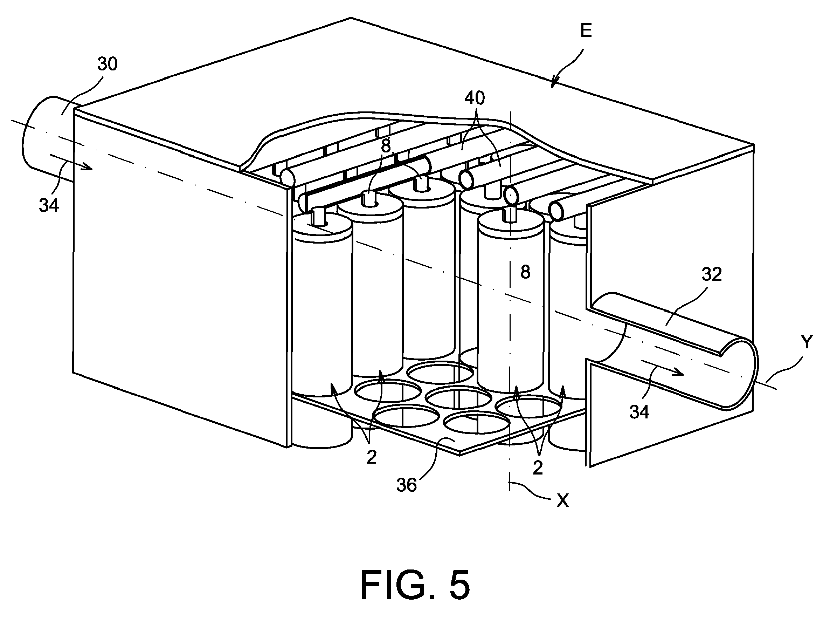

Un exemple d'un tel dispositif est représenté sur la figure 5, celui-ci sera décrit en détail par la suite.

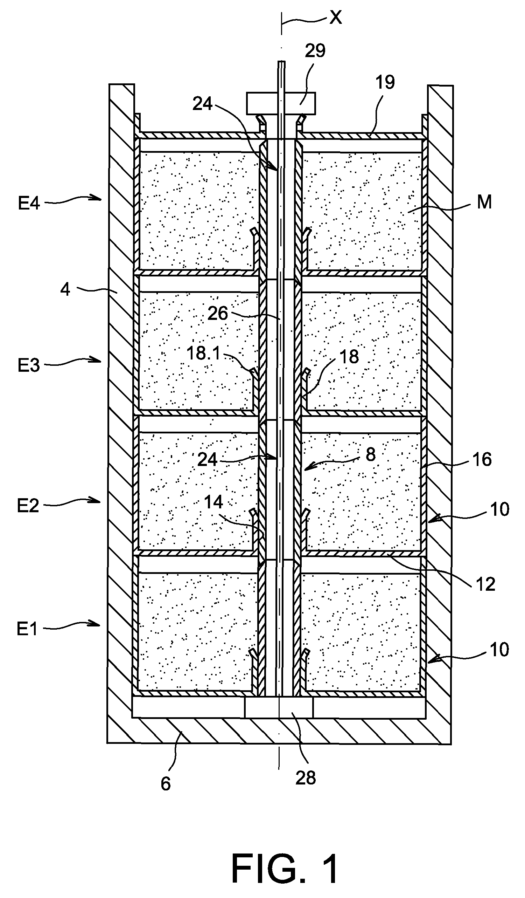

Sur la figure 1, on peut voir un exemple de réalisation d'un réservoir de matériau de stockage représenté schématiquement.

Le réservoir 2 comporte une virole 4 d'axe longitudinal X obturée à une extrémité inférieure par un fond inférieur 6. Le réservoir comporte également un fond supérieur (non représenté) fermant l'extrémité supérieure de la virole.

Le réservoir est destiné à être généralement orienté de sorte que l'axe longitudinal X est sensiblement aligné avec la direction du vecteur gravité. Cependant lors de son utilisation, notamment dans le cas d'une utilisation embarqué, son orientation peut changer.

Le réservoir comporte des moyens 8 d'alimentation en hydrogène et de collecte de l'hydrogène formé par un conduit s'étendant le long de l'axe longitudinal X du fond inférieur 6 au fond supérieur.

Le conduit est par exemple en matériau poreux, par exemple réalisé en Poral® ou percé de trous traversants, et connecté à un circuit d'alimentation et de collecte d'hydrogène, par exemple au niveau de l'une de ses extrémités longitudinales; la taille des trous est suffisamment faible pour éviter le passage de la poudre. On peut par exemple un conduit en matériau poreux calibré sur une taille de 1 µm pour assurer une étanchéité à la poudre hydrure et un passage de l'hydrogène.

L'intérieur du réservoir est divisé en une pluralité d'étages E1, E2, E3, E4 le long de l'axe X et chaque étage comporte du matériau de stockage.

Les étages E1, E2, E3, E4 sont réalisés de telle manière qu'ils empêchent le passage du matériau de stockage sous forme de poudre d'un étage à l'autre, évitant ainsi l'accumulation de poudre dans un étage, notamment dans les étages inférieurs et l'apparition de pressions sur la paroi du réservoir.

Chaque étage est formé par un godet 10 monté autour du conduit 8.

Chaque godet 10 comporte un fond 12 sensiblement perpendiculaire à l'axe longitudinal X, muni d'un passage central 14, une paroi extérieure 16 sensiblement perpendiculaire au fond 12 et s'étendant sur toute la périphérie extérieure du fond 12 et une paroi intérieure 18 sensiblement perpendiculaire au fond 12 et bordant tout le passage 14. Ainsi chaque godet 10 forme un bac de forme annulaire contenant du matériau de stockage M.

Le diamètre extérieur de la paroi extérieure 16 des godets est tel qu'il permet l'insertion des godets dans la virole 4 tout en assurant un contact avec celle-ci pour permettre au matériau de stockage via les godets d'échanger de la chaleur avec un fluide caloporteur circulant à l'extérieur du réservoir.

De manière avantageuse, la largeur de chaque étage est sensiblement supérieure à sa hauteur afin d'éviter l'apparition de contraintes dans le bas des étages lors du chargement en hydrogène du matériau de stockage. En effet, le volume de poudre au fond d'un étage est plus dense et susceptible d'exercer le plus de contraintes sur la paroi latérale. En réduisant l'épaisseur de poudre, l'expansion verticale du matériau de stockage lors du chargement en hydrogène est moins gênante et limite l'apparition de contraintes dans le fond de l'étage.

La dimension selon l'axe longitudinal X ou hauteur de la paroi extérieure 16 est supérieure à celle de la paroi intérieure 18, de sorte que lorsque deux godets sont superposés, le fond du godet situé au-dessus est en contact uniquement avec la paroi extérieure 16 du godet situé au-dessous.

Les godets 10 comportent des moyens assurant un contact étanche entre la paroi extérieure du godet situé au-dessous et le fond du godet situé au-dessus, mettant en oeuvre une déformation mécanique de l'une au moins des deux godets. Ainsi, le godet situé au-dessus forme le couvercle du compartiment délimité par le godet situé au-dessous.

Dans la présente demande, on entend par "déformation mécanique ", une déformation principalement élastique qui est donc une déformation réversible du matériau, le retrait du godet situé au-dessus provoque un retour dans sa forme initiale du godet situé au-dessous. Néanmoins une faible déformation plastique peut avoir lieu sans que cela soit préjudiciable à l'étanchéité entre les godets, si cette déformation plastique permet une conformation des godets entre eux assurant un rattrapage des défauts géométriques.

Dans l'exemple représenté, le réservoir comporte quatre étages comprenant chacun un compartiment de matériau de stockage. La structure des compartiments des étages E1, E2, E3 sont identiques. Le compartiment de l'étage E4 comporte un godet et est obturé par un couvercle 19 de forme similaire au fond des godets. En variante, on pourrait envisager d'utiliser un godet 10 pour fermer le compartiment de l'étage E4, ce godet ne servirait alors que de couvercle et ne serait pas rempli de matériau de stockage. Cette variante présente un encombrement plus important que l'exemple représenté, mais présente l'avantage de n'utiliser que des godets identiques.

Chaque godet comporte une extrémité longitudinale supérieure 22 formée par l'extrémité libre de la paroi extérieure 16 et un bord extérieur inférieur 21 formé au niveau de la connexion de la paroi extérieure 16 et du fond 12.

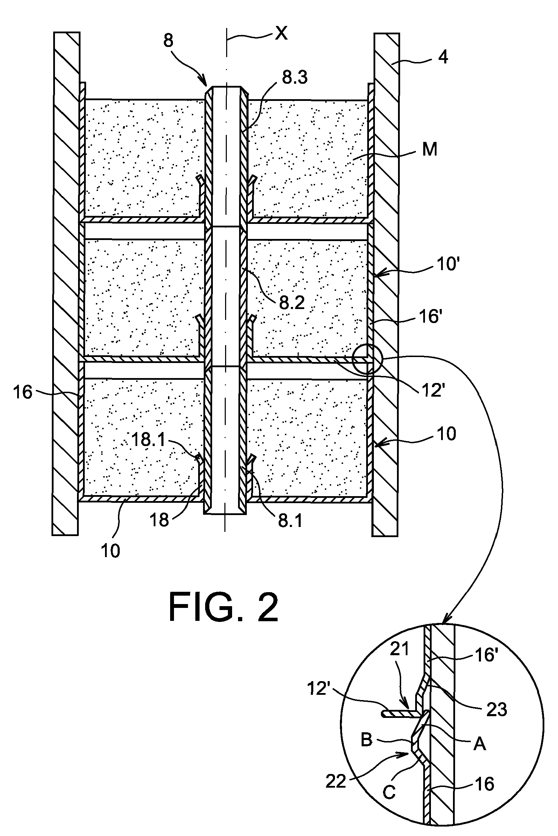

Sur la figure 2, on peut voir un exemple de réalisation des godets dans lequel les godets sont connectés de manière étanche principalement par déformation élastique de l'extrémité libre de la paroi extérieure du godet situé au-dessous.

L'extrémité longitudinale supérieure 22 et le bord extérieur inférieur 22 sont réalisés de sorte à permettre un emboîtement du godet situé au-dessus dans le godet situé au-dessous par déformation élastique principalement de la paroi extérieure 16 du godet située au-dessous.

Le godet situé au-dessus porte la référence 10' et le godet situé au-dessous porte la référence 10.

L'extrémité longitudinale supérieure est conformée de sorte à pouvoir se déformer élastiquement de manière radiale et axiale. Dans l'exemple représenté sur la figure 2, l'extrémité longitudinale supérieure comporte une zone déformable élastiquement 22 formée, en partant de l'extrémité libre, d'une première partie A inclinée en éloignement de l'axe longitudinal X, d'une deuxième partie B sensiblement parallèle à l'axe longitudinal X et d'une troisième partie C inclinée vers l'axe longitudinal X. Vue en coupe longitudinale, l'extrémité longitudinale supérieure 22 a la forme d'un trapèze. La déformation radiale permet de rattraper les défauts géométriques, et la déformation axiale résout l'hyperstaticité.

Le fond du godet présente une section transversale extérieure réduite par rapport au plus grand diamètre de la première partie A de la zone déformable 22 de sorte qu'il puisse pénétrer dans le godet 10 situé au-dessous comme on peut le voir sur le détail de la figure 2, mais il est supérieur au diamètre intérieur du godet situé au-dessous au niveau de la deuxième partie B de sorte à provoquer la déformation élastique de la zone déformable 22 lors de son insertion. Le fond est relié à la paroi extérieure 12 avantageusement par une portion 23 inclinée en éloignement de l'axe longitudinal X.

La combinaison des parties A, B, C de la paroi extérieur 16 procure une certaine souplesse à l'ajustement, ce qui facilite l'insertion du fond du godet situé au-dessus 10' dans le godet 10 situé au-dessous.

Lors de l'assemblage du réservoir, lorsqu'un godet 10' situé au-dessus est monté sur un godet 10 situé au-dessous, le fond de section réduite pénètre dans le godet 10 situé au-dessous en exerçant un effort de composante à la fois axiale et radiale. La composante radiale de l'effort plaque la première partie A sur le bord extérieur inférieur 21 déformant celle-ci élastiquement. Un contact étanche entre les deux godets 10, 10' est ainsi réalisé et un compartiment étanche à la poudre est formé. La composante axiale résout l'hyperstaticité de l'assemblage des godets 10 et 10'.

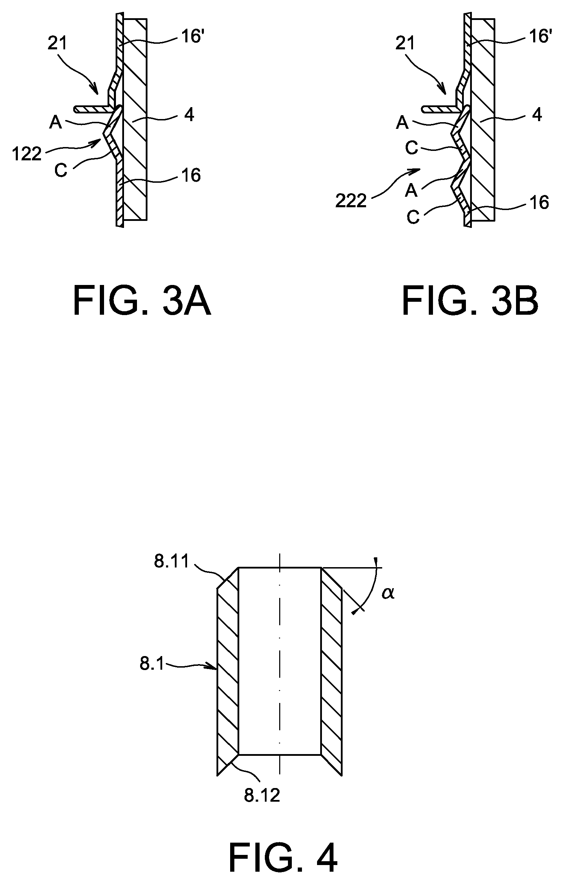

Sur les figures 3A et 3B, on peut voir d'autres variantes de réalisation de ce contact étanche.

Sur la figure 3A, la zone déformable 122 comporte uniquement une première partie A et une troisième partie C. L'extrémité supérieure 122 a alors, vue en coupe une forme triangulaire.

Sur la figure 3B, la zone déformable 122 comporte deux motifs successifs formés chacun par une première partie A et une troisième partie C.

Les caractéristiques de la zone déformable 22 de chaque godet (épaisseur, forme générale, angles et rayons de courbure selon la forme choisie) sont choisies de sorte à présenter les propriétés de déformation élastique attendues.

Dans l'exemple représenté et de manière avantageuse, l'extrémité libre 18.1 de la paroi intérieure 18 est évasée de sorte à faciliter la mise en place du conduit 8 dans le passage.

Le conduit 8 peut être d'un seul tenant les godets étant montés à force autour du conduit.

Dans l'exemple avantageux représenté, le conduit 8 est formé de plusieurs portions 8.1 à 8.4 emboîtées les unes dans les autres.

Sur la figure 4, on peut voir une vue agrandie de l'une des ces portions 8.1.

Les extrémités longitudinales 8.11, 8.12 de la portion 8.1 sont biseautées de sorte que l'une des extrémités forme une connexion mâle et l'autre forme une connexion femelle apte à coopérer avec des connexions femelle et mâle respectivement d'autres portions de conduit.

De préférence, chaque portion 8.1 à 8.4 est montée à force dans le passage central d'un godet, et le sous-ensemble ainsi formé est assemblé avec un autre sous-ensemble.

La forme biseautée ou conique des extrémités de portions de conduit 8.1 à 8.4 assure un centrage automatique des sous-ensembles les uns par rapport aux autres.

De préférence, les extrémités longitudinales coniques des portions de conduit présentent un angle au sommet = 90° - α inférieur ou égal à 45° de sorte à réduire les risques de décentrage.

De préférence, l'angle au sommet a une valeur suffisamment grande, de préférence supérieure au complément à 90° de l'angle de frottement entre les matériaux constitutifs des portions de conduit 8.1 à 8.4, ce qui assure un auto-serrage du contact par frettage.

Dans l'exemple représenté la portion de conduit 8.1 pénètre dans la portion de conduit 8.2 mais une disposition inverse ne sort pas du cadre de la présente invention.

On peut envisager d'autres formes pour les extrémités des portions de conduit, par exemple, on peut envisager qu'une extrémité présente une rainure annulaire à profil en V et que l'autre extrémité présente une nervure annulaire à profil en V correspondant à celui de la rainure en V.

Le contact entre le conduit 8 et la paroi intérieure 18 des godets est étanche à la poudre.

De préférence, les godets sont réalisés en un matériau bon conducteur thermique et apte à assurer une tenue mécanique suffisante, par exemple il peut s'agir d'aluminium, de cuivre.... En effet, les godets participent à l'apport de chaleur pour déstocker l'hydrogène stocké dans l'hydrure ou à l'extraction de la chaleur pour stocker de l'hydrogène dans l'hydrure.

De préférence, le conduit est réalisé dans un matériau présentant un coefficient de dilatation thermique proche de ou égal à celui du matériau des godets de sorte à réduire les risques d'endommagement liés à une dilation thermique différentielle entre les godets et le conduit. Il est envisageable de réaliser un réservoir dans lequel le matériau du conduit présenterait un coefficient de dilatation thermique un peu plus élevé que celui du matériau des godets ne sort pas du cadre de la présente invention. Les dimensions du conduit et des godets seront déterminés par calcul en fonction des propriétés de leurs matériaux de sorte que sous sollicitation de cyclage thermique, les deux pièces maintiennent un ajustement serré.

Le réservoir comporte également des moyens aptes à exercer un effort de serrage longitudinal sur les godets de sorte à les maintenir les uns contre les autres et à permettre d'orienter le réservoir dans toutes les directions, et à confirmer le contact étanche entre les godets. Il est à noter que le poids exercé par l'hydrure contenu dans les godets participe au contact étanche, plus particulièrement pour les godets inférieurs.

Dans l'exemple représenté, les moyens de serrage 24 comportent un tirant traversant l'empilement par l'intérieur du tube 8 et exerçant un effort entre le godet situé en bas de l'empilement et le godet situé en haut de l'empilement. Le tirant comporte une tige 26 disposée dans le conduit, une pièce d'appui 28 fixée à une extrémité longitudinale de la tige 26 et présentant des dimensions suffisantes pour qu'elle vienne en butée contre le fond du godet situé en bas de l'empilement et un écrou de serrage 29 vissé sur la tige au niveau de son autre extrémité longitudinale qui est filetée. L'écrou de serrage est vissé sur la tige après mise en place du godet situé en haut de l'empilement.

En variante, la tige pourrait être remplacée par un câble, une tige filetée serait alors montée uniquement en partie haute du câble.

Nous allons maintenant décrire l'assemblage d'un tel réservoir.

Préalablement à la mise en place des godets, on met en place la tige 26 et la pièce d'appui 28 dans la virole 4, la pièce d'appui 28 reposant sur le fond inférieur 6 du réservoir.

Des sous-ensembles formés par un godet et une portion de conduit sont préalablement assemblés. Pour cela, une portion de conduit 8.1 est insérée à force dans le passage central du godet 10. Ce montage serré assure une étanchéité à la poudre entre la portion de conduit 8.1 et le godet 10. Pour réaliser le réservoir représenté sur la figure 1, quatre sous ensembles sont fabriqués.

Lors d'une étape suivante, on introduit un premier sous-ensemble dans la virole autour de la tige 26, celui-ci repose sur le fond inférieur contre la pièce d'appui 28.

Le godet du premier sous-ensemble est de préférence rempli avant sa mise en place au fond de la virole. Mais un remplissage après le montage dans la virole ne sort pas du cadre de la présente invention.

Le godet du premier sous-ensemble est rempli de préférence avant sa mise en place au fond de la virole avec le matériau de stockage en variante, le godet peut être rempli après sa mise en place au fond de la virole. Celui-ci peut être en poudre ou sous la forme d'un ou plusieurs blocs solides, avantageusement il peut s'agir d'un seul bloc solide de forme annulaire. Le taux de remplissage dépend des caractéristiques du matériau de stockage. En complément à la porosité de l'hydrure sous forme granulaire, un espace de dilatation au-dessus du matériau de stockage peut être prévu pour tenir compte du gonflement du matériau de stockage lors de l'absorption.

Lors d'une étape suivante, on introduit le deuxième sous-ensemble dans la virole 4 autour de la tige 26. La portion du conduit 8.2 s'emboîte dans la portion de conduit 8.1 du premier sous-ensemble et le fond du godet 10' du deuxième sous-ensemble s'emboîte dans le godet 10 du premier sous-ensemble provoquant la déformation élastique de la paroi extérieure 16 et assurant une fermeture étanche du premier compartiment. Il est à noter que la déformation optimale est obtenue en serrant l'écrou 29 à la fin du procédé d'assemblage.

On répète les mêmes opérations pour les étages E2 et E3.

Pour l'étage E4 après remplissage du godet, le couvercle 19 est emboité par déformation élastique dans le godet fermant le dernier compartiment. Le couvercle 19 est également muni en son centre d'une portion de conduit qui s'emboîte dans la portion de conduit 8.4 du sous-ensemble inférieur.

Grâce à la structure du réservoir, lors de l'assemblage on crée une liaison rigide entre les différentes portions de conduite au centre du réservoir et une liaison élastique entre les godets au niveau des parois extérieures.

L'écrou de serrage 29 est ensuite vissé sur l'extrémité longitudinale de la tige 26 faisant saillie de l'empilement, l'écrou 29 exerce alors un appui sur la paroi intérieure du couvercle bordant la portion de conduit. L'effort exercé par l'écrou confirme le contact étanche entre les godets et évite aux compartiments de s'ouvrir si par exemple le réservoir venait à se renverser. L'écrou présente au moins un passage pour l'hydrogène. En effet dans cet exemple le conduit est ensuite connecté à des moyens d'alimentation et de collecte de l'hydrogène. Le passage pour l'hydrogène peut aussi se faire au moyen de trous réalisés sous l'écrou 29. La connexion aux moyens d'alimentation et de collecte de l'hydrogène se fait par les trous et/ou par un passage central dans l'écrou 29.

La déformation mécanique radiale vers l'extérieur a également pour avantage d'améliorer le contact entre les parois extérieures des godets et la virole et ainsi améliorer les échanges thermiques.

Le réservoir est ensuite fermé de manière étanche au gaz par un fond supérieur qui est muni d'un passage pour la connexion aux moyens d'alimentions et de collecte de l'hydrogène.

Sur la figure 5, on peut voir un exemple de dispositif de stockage

Le dispositif comporte une enceinte E et une pluralité de réservoirs 2 tels que décrit ci-dessus disposée à l'intérieur de l'enveloppe 2. L'enceinte est remplie d'un fluide caloporteur pour immerger les réservoirs.

Dans l'exemple représenté, l'enceinte comporte un orifice d'alimentation 30 d'un fluide d'échange thermique et un orifice d'évacuation 32 dudit fluide d'échange thermique, le fluide d'échange thermique traversant l'enceinte de part en part, sa circulation étant symbolisée par les flèches 34.

Une enceinte ne comportant qu'un orifice formant alimentation et évacuation ne sort pas du cadre de la présente invention, le fluide effectuant par exemple un aller et retour.

De manière préférée, le dispositif est disposé de manière à ce que la direction de circulation du fluide soit sensiblement horizontale et que chaque réservoir 4 présente un axe longitudinal X disposé sensiblement verticalement, de sorte à être orthogonal à la direction d'écoulement du fluide d'échange thermique.

Les réservoirs sont de préférence disposés sensiblement parallèlement les uns par rapport aux autres, formant une " forêt " de réservoirs et à distance les uns des autres de sorte à permettre au fluide d'échange thermique de circuler entre les réservoirs.

Les réservoirs sont, dans l'exemple représenté, montés dans une grille support 36, formée par une plaque percée de trous dans lesquels sont introduits les réservoirs. On peut envisager également de souder les réservoirs sur la grille support ou de les fixer par tout autre moyen. Dans l'exemple représenté, la grille support se situe au niveau d'une partie inférieure des réservoirs, mais il est bien entendu qu'elle pourrait être disposée au niveau d'une partie médiane des réservoirs ou de maintenir les réservoirs au niveau de l'une ou l'autre de leurs extrémités longitudinales. En outre, plusieurs grilles supports pourraient être utilisées si nécessaire. Dans l'exemple représenté, les réservoirs sont disposés suivant des lignes parallèles, les réservoirs de deux lignes adjacentes étant en quinconce.

Cette disposition est avantageuse, puisqu'elle assure une plus grande distance de circulation du fluide. Mais il est bien entendu que l'on pourrait prévoir toute autre disposition favorisant les échanges thermiques entre les réservoirs et le fluide d'échange thermique.

De manière avantageuse, les conduits 8 des tubes de stockage de chaque ligne sont connectés en parallèle à un conduit 40. Tous les conduits 40 sont connectés en parallèle à un conduit général (non visible).

La collecte de l'hydrogène libéré ou fourni est effectuée par le conduit 8.

La libération de l'hydrogène peut être obtenue par apport de chaleur. Sous chauffage, il y a désorption de l'hydrogène qui circule librement et s'évacue par pression vers le haut des cylindres. Eventuellement, on pourrait prévoir des moyens de pompage.

Dans un autre exemple de réalisation, le dispositif de stockage comporte un ou plusieurs réservoirs, chaque réservoir est entouré d'une chemise qui ménage avec la virole du réservoir un canal annulaire dans lequel circule un fluide caloporteur.

Dans un autre exemple encore, le dispositif de stockage comporte un ou plusieurs réservoirs, la virole de chaque réservoir est entourée par un tube en serpentin dans lequel circule un fluide caloporteur.

De manière avantageuse, les étages ont tous la même hauteur et sont remplis sensiblement avec la même quantité de matériau de stockage, ce qui simplifie la fabrication puisqu'on utilise des blocs de matériau de stockage identiques. Un réservoir avec des étages de hauteurs différentes et une répartition non uniforme du matériau de stockage le long de l'axe longitudinal X ne sort pas du cadre de la présente invention, ainsi qu'un dispositif de stockage comportant des réservoirs de taille et de capacité de stockage différentes.

Nous allons maintenant expliquer le fonctionnement du dispositif de stockage de la figure 5.

L'enceinte est remplie de fluide d'échange thermique noyant les réservoirs de stockage, le fluide circule dans l'enceinte pour extraire ou apporter des calories.

Lorsque l'on veut charger le dispositif de stockage en hydrogène, on fait circuler de l'hydrogène dans chaque réservoir via les tubes d'alimentation 8. La réaction d'absorption étant exothermique, de la chaleur est dégagée. On évacue la chaleur simultanément en faisant circuler le fluide d'échange thermique froid dans l'enceinte.

Plus la chaleur est évacuée rapidement et efficacement, plus le chargement du dispositif est rapide. Le matériau chargé en hydrogène forme alors un hydrure. Comme déjà expliqué, le matériau gonfle du fait de l'absorption et décrépite, pour former de la poudre.

Lorsque l'on souhaite disposer de l'hydrogène stocké dans le dispositif, on abaisse la pression d'hydrogène dans les réservoirs de stockage ou bien on chauffe l'hydrure via le fluide d'échange thermique.

L'hydrogène est désorbé. L'hydrogène ainsi libéré circule d'un étage à l'autre. L'hydrogène, circule grâce à la différence de pression entre le réservoir et la sortie du réservoir.

A titre d'exemple, le matériau de stockage disposé dans les compartiments peut être composé de un ou plusieurs matériaux de formule AₘBₙ, l'élément A étant un hydrure stable tel que les métaux alcalins ou alcalino-terreux comme le lithium, le calcium ou le magnésium, les métaux de transition de quatrième ou cinquième colonne comme le zirconium, le titane, ou enfin les terres rares métalliques comme le lanthane, le cérium et d'un élément B formant un hydrure instable dans les conditions standards de température et de pression, tel que la plupart des métaux de transition comme le chrome, le cobalt, le nickel ou le fer.

Le matériau de stockage peut être un hydrure d'élément simple comme MgH₂.

D'autres matériaux absorbant l'hydrogène comme les hydrures chimiques complexes avec des éléments légers tels que les alanates (NaAIH4), les hydrures à base de Li et de B tels que LiBH4, NaBH4,...

Le fluide d'échange thermique peut être un liquide tel que de l'eau, de l'huile ou un gaz.

La température de chargement et de déchargement du réservoir varie par exemple de -20°C à 400 °C. La pression de chargement varie par exemple de 0,1 Bar à 200 Bars H₂, et la pression de déchargement varie par exemple de 100 Bars à 0 Bar (absolus). Certains hydrures peuvent nécessiter des pressions de chargement encore plus importantes, par exemple 350 Bars.

La structure des réservoirs permet d'assurer une fermeture étanche sûre, robuste et de réalisation simple des compartiments du matériau de stockage thermique. Du matériau de stockage en poudre ne risque pas de s'accumuler dans le fond du réservoir et de modifier le fonctionnement du réservoir et éventuellement d'endommager le réservoir. En outre, la mise en oeuvre des liaisons élastiques permet d'accommoder des déformations résultant de différentiels de dilatation.

De plus, la déformation élastique des godets améliore le contact entre les godets et la virole et donc les échanges thermiques avec le caloporteur.

Par ailleurs, l'intérieur du réservoir est démontable très facilement, il suffit pour cela de retirer l'écrou de serrage.

Le dispositif selon la présente invention peut être utilisé comme moyen de transport de l'hydrogène, le stockage embarqué d'hydrogène pour pile à combustible ou moteur thermique, pour le stockage stationnaire d'hydrogène.

Le dispositif peut donc servir comme réservoir embarqué pour les moyens de transports, tels que les bateaux, sous-marins, voitures, autobus, camions, engins de chantier, deux roues, par exemple pour alimenter une pile à combustible ou un moteur thermique. En outre, il peut être utilisé dans le domaine des alimentations transportables en énergie tels les batteries pour appareils électroniques portables comme les téléphones portables, les ordinateurs portables,....

Le dispositif selon la présente invention peut également être utilisé comme système de stockage stationnaire de l'énergie en plus grosse quantité, comme les groupes électrogènes, pour le stockage de l'hydrogène produit en grande quantité par électrolyse avec des l'électricité provenant des éoliennes, panneaux photovoltaïques, géothermie, ....

Il est aussi possible de stocker toute autre source d'hydrogène provenant par exemple de reformage d'hydrocarbures ou d'autres procédés d'obtention d'hydrogène (photo-catalyse, biologique, géologique,...).

## Revendications

1. Réservoir de matériau de stockage de l'hydrogène pour dispositif de stockage de l'hydrogène par absorption dans un matériau de stockage de l'hydrogène, comportant une enveloppe (4) d'axe longitudinal (X) obturée à ses deux extrémités longitudinales, un conduit (8) d'alimentation en hydrogène et de collecte de l'hydrogène s'étendant le long de l'axe longitudinal (X), un empilement d'une pluralité de godets (10, 10') le long de l'axe longitudinal (X), chaque godet (10, 10') comportant un fond (12) sensiblement perpendiculaire à l'axe longitudinal (X), un passage (14) permettant le montage du godet (10, 10') autour du conduit, une paroi extérieure (16) perpendiculaire au fond (12), en contact avec l'enveloppe (4) et une paroi (18) intérieure perpendiculaire au fond (12) et en contact avec le conduit (8), la paroi extérieure (16, 16') présentant une dimension selon l'axe longitudinal (X) supérieure à celle de la paroi intérieure (18) de sorte que son extrémité libre soit en contact avec le fond du godet situé au-dessus dans l'empilement, chaque godet (10, 10') étant monté serré sur le conduit (8) et chaque godet (10, 10') comportant des moyens (21, 22) permettant l'emboîtement des godets les uns dans les autres par déformation mécanique desdites extrémités libres des parois extérieures (16, 16') des godets (10).

2. Réservoir selon la revendication 1, dans lequel les moyens (21, 22) permettant l'emboîtement des godets (10, 10') les uns dans les autres par déformation mécanique sont formés par une zone déformable (22) des parois extérieures (16, 16') situées au niveau des extrémités libres et présentant des portions inclinées (A, B, C) par rapport à l'axe longitudinal (X).

3. Réservoir selon la revendication 2, dans lequel chaque zone déformable comporte, du côté de l'extrémité libre de la paroi extérieure, une portion (A) inclinée en éloignement de l'axe longitudinal (X) de sorte à présenter une forme évasée facilitant l'emboîtement du fond (12') du godet (10') situé au-dessus dans l'empilement et au moins une portion (B) inclinée en rapprochement de l'axe longitudinal (X) et en ce que chaque fond (12, 12') d'un godet (10, 10') présente un diamètre inférieur à un plus grand diamètre intérieur de la paroi extérieure (16, 16') dudit godet (10, 10').

4. Réservoir selon la revendication 1, 2 ou 3, dans lequel le conduit (8) est formé d'une pluralité de portions de conduits (8.1, 8.2, 8.3) superposées le long de l'axe longitudinal (X), chaque portion de conduit (8.1, 8.2, 8.3) comportant avantageusement au niveau de leurs extrémités longitudinales des moyens de guidage du positionnement des portions de conduit les unes par rapport aux autres.

5. Réservoir selon l'une des revendications 1 à 4, dans lequel les godets (10, 10') sont réalisés en un matériau bon conducteur thermique.

6. Réservoir selon l'une des revendications 1 à 5, dans lequel la paroi intérieure (18) de chaque godet (10) comporte une extrémité libre évasée.

7. Réservoir selon l'une des revendications 1 à 6, comportant des moyens de serrage (24) exerçant un effort de serrage le long de l'axe longitudinal entre les godets (10) situés aux extrémités longitudinales de l'empilement, les moyens de serrage (24) comportant avantageusement un élément longitudinal (26) monté dans le conduit, une pièce d'appui (28) en butée contre un fond de l'un des godets (10) d'extrémité et un écrou de serrage (29) vissé sur l'élément longitudinal et en appui sur une extrémité libre de la paroi intérieure du godet situé à l'autre extrémité longitudinale.

8. Ensemble d'un réservoir selon l'une des revendications 1 à 7 et d'un matériau de stockage de l'hydrogène (M) disposé dans chacun des godets (10), de préférence le matériau de stockage (M) sous forme de poudre représente 40 % à 60 % du volume du godet.

9. Dispositif de stockage de l'hydrogène par absorption dans un matériau de stockage de l'hydrogène (M), comportant au moins un réservoir de stockage (2) selon l'une des revendications 1 à 7 ou un ensemble selon la revendication 8, un système d'alimentation en hydrogène et de collecte de l'hydrogène connectés au conduit (8) dudit au moins un réservoir (2) et des moyens d'échange thermique aptes à assurer un échange de chaleur avec le matériau de stockage destiné à être disposé dans le réservoir ou qui est disposé dans le réservoir.

10. Dispositif de stockage de l'hydrogène selon la revendication 9, comportant une enceinte (E) dans laquelle est disposé ledit au moins un réservoir (2) et les moyens d'échange thermique comportent des moyens d'alimentation et d'évacuation (6, 8) d'un fluide d'échange thermique au sein de l'enceinte (2) aptes à générer une circulation du fluide dans l'enceinte pour apporter ou extraire de la chaleur.

11. Dispositif de stockage de l'hydrogène selon la revendication 10, dans lequel le réservoir est entouré d'une chemise délimitant avec l'enveloppe du réservoir un canal et les moyens d'échange thermique assurent une circulation de fluide caloporteur dans ledit canal ou dans lequel ledit dispositif de stockage comporte un tube en serpentin entourant le réservoir et dans lequel les moyens d'échange thermique assurent une circulation de fluide caloporteur dans ledit tube en serpentin.

12. Dispositif de stockage de l'hydrogène selon l'une des revendications 9 à 11, comportant une pluralité de réservoirs (2), les réservoirs (2) ayant avantageusement leurs axes longitudinaux (X) sensiblement parallèles, le fluide caloporteur circulant entre les réservoirs.

13. Procédé de fabrication d'un ensemble selon la revendication 8 comportant les étapes :
a) mise en place du matériau de stockage (M) de l'hydrogène dans un premier godet (10),
b) mise en place du premier godet (10) dans l'enveloppe (4),
c) mise en place du matériau de stockage (M) de l'hydrogène dans un deuxième godet (10'), le matériau de stockage (M) de l'hydrogène étant avantageusement sous forme de bloc solide au moment de sa mise en place, dont la forme correspond à la forme intérieure du godet.
d) mise en place du deuxième godet (10') sur le premier godet (10) en emboîtant le fond (12') du deuxième godet (10') dans le premier godet (10) de sorte à déformer élastiquement l'extrémité libre de la paroi extérieure (16) du premier godet (10),
e) répétition des étapes c) et d) en fonction du nombre de compartiments souhaité,
f) fermeture de l'enveloppe (4),
le conduit étant monté préalablement au montage des godets ou au fur et à mesure, les godets étant montés à force sur ledit conduit.

14. Procédé de fabrication selon la revendication 13, dans lequel, préalablement à l'étape a), des sous-ensembles formés d'un godet et d'une portion de conduit (8.1, 8.2, 8.3) sont assemblés, une portion de conduit (8.1, 8.2, 8.3) étant montée à force dans le passage central (18) d'un godet.

15. Procédé de fabrication d'un dispositif de stockage selon l'une des revendications 9 à 12, comportant les étapes du procédé selon la revendication 13 ou 14 et les étapes de connexion aux systèmes d'alimentation et de collecte de l'hydrogène et d'assemblage avec un système d'échange thermique.

## Patentansprüche

1. Wasserstoffspeichermaterialtank für eine Vorrichtung zum Speichern von Wasserstoff durch Absorption in ein Wasserstoffspeichermaterial, enthaltend einen Mantel (4) mit Längsachse (X), der an seinen beiden Längsenden verschlossen ist, eine Versorgungsleitung (8) zum Versorgen mit Wasserstoff und zum Sammeln von Wasserstoff, die sich in der Längsachse (X) erstreckt, eine Stapelung einer Mehrzahl von Näpfen (10, 10') entlang der Längsachse (X), wobei jeder Napf (10, 10') einen im Wesentlichen senkrecht zur Längsachse (X) verlaufenden Boden (12) enthält, einen Durchgang (14), der das Anbringen des Napfs (10, 10') um die Leitung herum gestattet, eine senkrecht zum Boden (12) verlaufende Außenwand (16) in Kontakt mit dem Mantel (4) und eine senkrecht zum Boden (12) verlaufende Innenwand (18) in Kontakt mit der Leitung (8), wobei die Außenwand (16, 16') eine Abmessung in der Längsachse (X) aufweist, die größer als die der Innenwand (18) ist, so dass deren freies Ende in Kontakt mit dem Boden des Napfs ist, der in der Stapelung darüber liegt, wobei jeder Napf (10, 10') an der Leitung (8) verspannt angebracht ist und jeder Napf (10, 10') Einsteckmittel (21, 22) aufweist, die das Einstecken der Näpfe ineinander durch mechanische Verformung der freien Enden der Außenwände (16, 16') der Näpfe (10) gestatten.

2. Tank nach Anspruch 1, wobei die Einsteckmittel (21, 22) zum Einstecken der Näpfe (10, 10') ineinander durch mechanische Verformung aus einem verformbaren Bereich (22) der Außenwände (16, 16') gebildet sind, die im Bereich der freien Enden liegen und bezüglich der Längsachse (X) geneigte Abschnitte (A, B, C) aufweisen.

3. Tank nach Anspruch 2, wobei jeder verformbare Bereich auf der Seite des freien Endes der Außenwand einen von der Längsachse (X) weg geneigten Abschnitt (A) enthält, so dass er eine auskragende Form aufweist, die das Einstecken des Bodens (12') des in der Stapelung darüber liegenden Napfs (10') erleichtert, sowie zumindest einen zur Längschase (X) hin geneigten Abschnitt (B), und dass jeder Boden (12, 12') eines Napfes (10, 10') einen Durchmesser aufweist, der kleiner als ein größerer Innendurchmesser der Außenwand (16, 16') des Napfs (10, 10') ist.

4. Tank nach Anspruch 1, 2 oder 3, wobei die Leitung (8) aus einer Mehrzahl von Leitungsabschnitten (8.1, 8.2, 8.3) besteht, die entlang der Längsachse (X) übereinanderliegen, wobei jeder Leitungsabschnitt (8.1, 8.2, 8.3) vorteilhaft im Bereich seiner Längsenden Führungsmittel zum Führen bei der Positionierung der Leitungsabschnitte zueinander enthält.

5. Tank nach einem der Ansprüche 1 bis 4, wobei die Näpfe (10, 10') aus einem gut wärmeleitenden Material hergestellt sind.

6. Tank nach einem der Ansprüche 1 bis 5, wobei die Innenwand (18) eines jeden Napfs (10) ein auskragendes, freies Ende aufweist.

7. Tank nach einem der Ansprüche 1 bis 6, enthaltend Spannmittel (24), die entlang der Längsachse eine Spannkraft zwischen den an den Längsenden der Stapelung liegenden Näpfen (10) ausüben, wobei die Spannmittel (24) vorteilhaft ein in der Leitung angebrachtes, längs verlaufendes Element (26), ein Abstützteil (28) in Anschlag an einem Boden eines der endseitigen Näpfe (10) und eine Spannmutter (29) enthalten, die an das längs verlaufende Element angeschraubt ist und in Anlage an einem freien Ende der Innenwand des Napfs liegt, der am anderen Längsende liegt.

8. Einheit aus einem Tank nach einem der Ansprüche 1 bis 7 und einem Speichermaterial zum Speichern von Wasserstoff (M), das in jedem der Näpfe (10) vorliegt, wobei das Speichermaterial (M) in Pulverform 40 % bis 60 % des Napfvolumens darstellt.

9. Vorrichtung zum Speichern von Wasserstoff durch Absorption in ein Wasserstoffspeichermaterial (M), enthaltend zumindest einen Speichertank (2) nach einem der Ansprüche 1 bis 7 bzw. eine Einheit nach Anspruch 8, ein System zum Versorgen mit Wasserstoff und zum Sammeln von Wasserstoff, das an die Leitung (8) des zumindest einen Tanks (2) angeschlossen ist, und Wärmeaustauschmittel, die dazu geeignet sind, einen Wärmeaustausch mit dem Speichermaterial sicherzustellen, das in den Tank angeordnet werden soll oder in dem Tank angeordnet ist.

10. Vorrichtung zum Speichern von Wasserstoff nach Anspruch 9, enthaltend einen Behälter (E), in welchem der zumindest eine Tank (2) angeordnet ist, wobei die Wärmeaustauschmittel Versorgungs- und Ableitmittel (6, 8) zum Versorgen und Ableiten von einem Wärmeaustauschmedium innerhalb des Behälters (2) enthalten, die dazu geeignet sind, eine Umwälzung des Mediums in dem Behälter zu bewirken, um Wärme einzutragen bzw. abzuführen.

11. Vorrichtung zum Speichern von Wasserstoff nach Anspruch 10, wobei der Tank mit einer Verkleidung umgeben ist, die mit dem Mantel des Tanks einen Kanal eingrenzt, und wobei die Wärmeaustauschmittel eine Umwälzung von Wärmeträgermedium in dem Kanal sicherstellen oder wobei die Speichervorrichtung ein serpentinenartig verlaufendes Rohr aufweist, das den Tank umgibt und in welchem die Wärmeaustauschmittel eine Umwälzung von Wärmeträgermedium in dem serpentinenartig verlaufenden Rohr sicherstellen.

12. Vorrichtung zum Speichern von Wasserstoff nach einem der Ansprüche 9 bis 11, enthaltend eine Mehrzahl von Tanks (2), wobei die Tanks (2) mit ihren Längsachsen (X) vorteilhaft parallel verlaufen, wobei das Wärmeträgermedium zwischen den Tanks zirkuliert.

13. Verfahren zum Herstellen einer Anordnung nach Anspruch 8, enthaltend die nachfolgenden Schritte:
a) Einsetzen des Wasserstoff-Speichermaterials (M) in einen ersten Napf (10),
b) Einsetzen des ersten Napfs (10) in den Mantel (4),
c) Einsetzen des Wasserstoff-Speichermaterials (M) in einen zweiten Napf (10'), wobei das Wasserstoff-Speichermaterial (M) zum Zeitpunkt seines Einsetzens vorteilhaft in Form von einem festen Block vorliegt, dessen Form der Innenform des Napfs entspricht,
d) Einsetzen des zweiten Napfs (10') auf den ersten Napf (10), indem der Boden (12') des zweiten Napfs (10') in den ersten Napf (10) eingesteckt wird, so dass das freie Ende der Außenwand (16) des ersten Napfs (10) elastisch verformt wird,
e) Wiederholen der Schritte c) und d) in Abhängigkeit von der gewünschten Anzahl von Räumen,
f) Verschließen des Mantels (4),
wobei die Leitung vor der Anbringung der Näpfe oder im Laufe dessen angebracht wird, wobei die Näpfe unter Kraftaufwand an der Leitung angebracht werden.

14. Herstellungsverfahren nach Anspruch 13, wobei vor Schritt a) aus einem Napf und einem Leitungsabschnitt (8.1, 8.2, 8.3) gebildete Untereinheiten zusammengefügt werden, wobei ein Leitungsabschnitt (8.1, 8.2, 8.3) unter Kraftaufwand in den mittigen Durchgang (18) eines Napfs angebracht wird.

15. Verfahren zum Herstellen einer Speichervorrichtung nach einem der Ansprüche 9 bis 12, umfassend die Schritte nach Anspruch 13 oder 14 und Schritte des Verbindens der Systeme zum Versorgen und Sammeln von Wasserstoff und des Zusammenfügens mit einem Wärmeaustauschsystem.

## Claims

1. Hydrogen storage material tank for a device for hydrogen storage by absorption in a hydrogen storage material, comprising a shell (4) along a longitudinal axis (X) sealed at both its longitudinal ends, a hydrogen supply and collection duct (8) extending along the longitudinal axis (X), a stack of several cups (10, 10') along the longitudinal axis (X), wherein each cup (10, 10') comprises a base (12) approximatively perpendicular to the longitudinal axis (X), a passage (14) allowing installation of the cup (10, 10') around the duct, an outer wall (16) perpendicular to the base (12), in contact with the shell (4) and an inner wall (18) perpendicular to the base (12) and in contact with the duct (8), wherein the outer wall (16, 16') has a dimension along the longitudinal axis (X) greater than that of the inner wall (18) such that its free end is in contact with the base of the cup located above in the stack, wherein each cup (10, 10') is press-fitted on the duct (8) and each cup (10, 10') comprises means (21, 22) allowing mutual engagement of the cups in one another by mechanical deformation of said free ends of the outer walls (16, 16') of the cups (10).

2. Tank according to claim 1, in which the means (21, 22) allowing mutual engagement of the cups (10, 10') in one another by mechanical deformation are formed by a deformable area (22) of the outer walls (16, 16') located at the free ends and having portions angled (A, B, C) in relation to the longitudinal axis (X).

3. Tank according to claim 2, wherein each deformable area comprises, on the free end side of the outer wall, a portion (A) angled away from the longitudinal axis (X) so as to display a flared shape facilitating mutual engagement of the base (12) of the cup (10') located above in the stack and at least one portion (B) angled towards the longitudinal axis (X) and wherein each base (12, 12') of a cup (10, 10') has a diameter smaller than the largest internal diameter of the outer wall (16, 16') of said cup (10, 10').

4. Tank according to claim 1, 2 or 3, in which the duct (8) is formed of several duct portions (8.1, 8.2, 8.3) superimposed along the longitudinal axis (X), each duct portion (8.1, 8.2, 8.3) comprising advantageously on its longitudinal ends means of guiding positioning of the duct portions in relation to one another.

5. Tank according to any of claims 1 to 4, wherein the cups (10, 10') are executed in a material with good thermal conductivity.

6. Tank according to any of claims 1 to 5, wherein the inner wall (18) of each cup (10) comprises a flared free end.

7. Tank according to any of claims 1 to 6 comprising clamping means (24) exerting a clamping force along the longitudinal axis between the cups (10) located at the longitudinal ends of the stack, the clamping means (24) comprising advantageously a longitudinal element (26) installed in the duct, a support piece (28) abutting against the base of one of the end cups (10) and a clamping nut (29) screwed on the longitudinal element and resting on the free end of the inner wall of the cup located at the other longitudinal end.

8. Assembly of a tank according to any of claims 1 to 7 and a hydrogen storage material (M) arranged in each of the cups (10) the storage material (M) in powder form preferably representing between 40% and 60% of the volume of the cup.

9. Device for hydrogen storage by absorption in a hydrogen storage material (M), comprising at least one storage tank (2) according to any of claims 1 to 7 or an assembly according to claim 8, a hydrogen supply and collection system connected to the duct (8) of said at least one tank (2) and thermal exchange means capable of ensuring thermal exchange with the storage material intended to be arranged in the tank or which is arranged in the tank.

10. Hydrogen storage device according to claim 9, comprising an enclosure (E) in which said at least one tank (2) is arranged and the thermal exchange means comprise means of supply and discharge (6, 8) of a thermal exchange fluid within the enclosure (2) capable of generating fluid circulation within the enclosure in order to contribute or extract heat.

11. Hydrogen storage device according to claim 10, wherein the tank is surrounded by a jacket delimiting a channel with the tank shell and the thermal exchange means ensure circulation of heat transfer fluid in said channel or wherein the storage device comprises a coiled tube surrounding the tank and wherein the thermal exchange means ensure circulation of the heat transfer fluid in said coiled tube.

12. Hydrogen storage device according to any of claims 9 to 11, comprising several tanks (2), the longitudinal axes (X) of the tanks (2) being advantageously approximatively parallel, with the heat transfer fluid circulating between the tanks.

13. Manufacturing process of an assembly according to claim 8 comprising the stages of:
a) placement of the hydrogen storage material (M) in a first cup (10),
b) insertion of the first cup (10) in the shell (4),
c) introduction of the hydrogen storage material (M) into a second cup (10'), the hydrogen storage material (M) being advantageously in the form of a solid block at the time of its introduction, with a shape corresponding to the internal shape of the cup.
d) mounting of the second cup (10') on the first cup (10) by engaging the base (12') of the second cup (10') in the first cup (10) so as to deform elastically the free end of the outer wall (16) of the first cup (10),
e) repetition of stages c) and d) depending on the desired number of compartments,
f) closing of the shell (4),
wherein the duct is installed prior to assembly of the cups or as work progresses, with the cups being force-fitted on said duct.

14. Manufacturing process according to claim 13, wherein, prior to stage a), subassemblies formed of a cup and a duct portion (8.1, 8.2, 8.3) are assembled, wherein a duct portion (8.1, 8.2, 8.3) is force-fitted in the central passage (18) of a cup.

15. Manufacturing process of a storage device according to any of claims 9 to 12, comprising the stages of the process according to claim 13 or 14 and the stages of connection to the hydrogen supply and collection systems and of assembly with a thermal exchange system.
